# EUROPÄISCHE PATENTANMELDUNG

(11) **EP 4 293 647 A1**
(43) Veröffentlichungstag der Anmeldung: **20.12.2023**
(21) Anmeldenummer: 23171843.8
(22) Anmeldetag: 05.05.2023
(51) Int. Cl.: G08G 1/14, G08G 1/0968, G08G 1/017, G08G 1/015

(54) **VERFAHREN ZUM STEUERN EINES FAHRZEUGS IN EINEM VERKEHRSSYSTEM**

(30) Priorität: 15.06.2022 DE 102022206068
(71) Anmelder: Continental Automotive Technologies GmbH, 30165 Hannover (DE)
(72) Erfinder: Stählin, Ulrich, 60488 Frankfurt am Main (DE)
(74) Vertreter: Continental Corporation

(57) **Zusammenfassung**

Die Erfindung betrifft ein Verfahren zum Steuern eines Fahrzeugs (36) in einem Verkehrssystem (10), insbesondere einem Parksystem, wobei das Verkehrssystem (10) zumindest einen Umfeldsensor (16) zur Überwachung einer Verkehrsfläche (12) des Verkehrssystems (10), insbesondere einer Parkfläche eines Parksystems, ein Kommunikationssystem (20) zur Kommunikation mit dem Fahrzeug sowie ein Steuersystem (18) zum Berechnen eines Fahrwegs (24) für das Fahrzeug (36) aufweist, wobei das Verkehrssystem (10) über das Kommunikationssystem (20) die Steuerung eines Fahrzeugs (14) übernehmen und das Fahrzeug (14) entlang des berechneten Fahrwegs führen kann, mit folgenden Schritten:
- Anmelden des Fahrzeugs (14, 36) am Verkehrssystem (10),
- Prüfen durch das Verkehrssystem (10), ob über das Kommunikationssystem (20) eine Übernahme der Fahrzeugsteuerung durch das Verkehrssystem (10) erfolgen kann,
- wenn keine Übernahme der Fahrzeugsteuerung durch das Verkehrssystem (10) erfolgen kann, übermitteln eines berechneten Fahrweges (24) an den Fahrer und Führen des Fahrzeugs (36) durch den Fahrer entlang des übermittelten Fahrweges (24).

## Beschreibung

Die Erfindung betrifft ein Verfahren zum Steuern eines Fahrzeugs in einem Verkehrssystem, insbesondere einem Parksystem.

Aus dem Stand der Technik sind Verkehrssysteme zur Steuerung von Fahrzeugen innerhalb eines Verkehrsraumes bekannt. Dazu weist ein solches Verkehrssystem Umfeldsensoren auf, die den gesamten Verkehrsraum sowie alle sich in diesem Verkehrsraum bewegenden Verkehrsteilnehmer überwacht. Des Weiteren weist ein solches Verkehrssystem eine Steuereinheit auf, die für die sich in dem Verkehrsraum bewegenden Fahrzeuge jeweils einen Fahrweg berechnen kann, sowie eine Kommunikationseinrichtung. Die Kommunikationseinrichtung kann eine Kommunikationsverbindung zu den Fahrzeugen aufbauen, über die Fahranweisungen an die Fahrzeuge gesendet werden können, auf deren Grundlage die Fahrzeuge entlang der berechneten Fahrwege fahren können.

Das Verkehrssystem überwacht mit den Umfeldsensoren die Fahrzeuge und deren Bewegungen und kann die Fahranweisungen in Abhängigkeit von den Sensorinformationen der Umfeldsensoren gegebenenfalls anpassen und/oder korrigieren. Das Fahrzeug benötigt keine eigene Umfeldsensorik, da das gesamte Fahrzeugumfeld von den Umfeldsensoren überwacht wird. Wird mit den Umfeldsensoren eine Gefahrenstelle oder ein Hindernis für das Fahrzeug erkannt, werden die Fahranweisungen, die an das Fahrzeug gesendet werden, entsprechend angepasst. Beispielsweise kann das Fahrzeug zum Ausweichen veranlasst oder gestoppt werden.

Beispielsweise kann ein solches Verkehrssystem ein Automated Valet Parking System (AVP) Typ 2 sein. Bei einem solchen Parksystem wird ein Fahrzeug in einem Übergabebereich vom Fahrzeugführer an das Parksystem übergeben. Anschließend übernimmt das Parksystem die Steuerung des Fahrzeugs und fährt diese ferngesteuert an einen Abstellplatz. Das Fernsteuern umfasst hierbei die Übernahme der Steuerung des Fahrzeugs. Das heißt, das Verkehrssystem berechnet einen Fahrweg für das Fahrzeug und sendet entsprechende Informationen, beispielsweise Steuerbefehle, an das Fahrzeug, sodass das Fahrzeug entlang des Fahrwegs bewegt wird. Zusätzlich übernimmt das Verkehrssystem die Überwachung des Fahrzeugs und der gesamten Verkehrsfläche. Dies umfasst die Kontrolle, ob das Fahrzeug sich entlang des Fahrwegs bewegt, aber auch die Sicherstellung, dass das Fahrzeug nicht mit anderen Objekten, insbesondere sich bewegenden Objekten, kollidieren kann.

Das Verkehrssystem berechnet üblicherweise einen Fahrweg, wobei durch die Berechnung der Fahrwege sichergestellt ist, dass die Fahrzeuge einen ausreichenden Abstand untereinander haben.

Falls ein Fahrzeug keine Möglichkeit der Fernsteuerung durch das Verkehrssystem aufweist, darf diese nicht in das Verkehrssystem einfahren, da die Bewegungen dieses Fahrzeugs nicht durch das Verkehrssystem kontrolliert werden können. Falls ein solches Fahrzeug dennoch in das Verkehrssystem einfährt, wird dieses vom Verkehrssystem als Fremdobjekt bzw. Hindernis erkannt. Die Fahrzeuge müssen zu einem solchen Fremdobjekt einen möglichst großen Sicherheitsabstand halten, um einen Zusammenstoß mit dem Fremdobjekt zuverlässig zu verhindern. Dadurch kann die Berechnung der Fahrwege für die Fahrzeuge, für die das Verkehrssystem die Steuerung übernehmen kann, aufwendiger werden, da diese das Fremdobjekt weiträumig umfahren müssen.

Aufgabe der Erfindung ist es, ein Verfahren zum Steuern eines Fahrzeugs in einem Verkehrssystem bereitzustellen, das auch bei einem Befahren von Fahrzeugen, die nicht ferngesteuert werden können, eine möglichst hohe Sicherheit sowie einen möglichst verzögerungsfreien Ablauf des Verkehrs sicherstellt.

Zu Lösung der Aufgabe ist ein Verfahren zum Steuern eines Fahrzeugs in einem Verkehrssystem, insbesondere einem Parksystem, vorgesehen, wobei das Verkehrssystem zumindest einen Umfeldsensor zur Überwachung eines Verkehrsbereiches des Verkehrssystems, insbesondere einer Parkfläche eines Parksystems, ein Kommunikationssystem zur Kommunikation mit dem Fahrzeug sowie ein Steuersystem zum Berechnen eines Fahrwegs für das Auto aufweist. Das Verkehrssystem kann über das Kommunikationssystem die Steuerung des Fahrzeugs übernehmen und das Fahrzeug entlang des berechneten Fahrwegs führen. Das Verfahren weist die folgenden Schritte auf:
- Anmelden des Fahrzeugs am Verkehrssystem,
- Prüfen durch das Verkehrssystem, ob über die Kommunikationseinrichtung eine Übernahme der Fahrzeugsteuerung erfolgen kann,
- wenn keine Übernahme der Fahrzeugsteuerung durch das Verkehrssystem erfolgen kann, übermitteln des berechneten Fahrweges an den Fahrer und führen des Fahrzeugs durch den Fahrer entlang des übermittelten Fahrweges.

Beim Anmelden des Fahrzeugs, vorzugsweise bevor das Fahrzeug in das Verkehrssystem einfährt, erfolgt also eine Überprüfung, ob das Verkehrssystem das Fahrzeug fernsteuern kann. Kann das Fahrzeug vom Verkehrssystem ferngesteuert werden, übernimmt das Verkehrssystem anschließend die Fernsteuerung des Fahrzeugs, berechnet einen Fahrweg für das Fahrzeug und führt das Fahrzeug entlang dieses Fahrwegs auf der Verkehrsfläche.

Ist keine Fernsteuerung des Fahrzeugs möglich, erfolgt ebenfalls eine Berechnung eines Fahrweges für das Fahrzeug und dieser Fahrweg wird dem Fahrer mitgeteilt, sodass dieser den Fahrweg selbstständig mit einem Fahrzeug abfahren kann.

Dadurch kann die Fahrt eines Fahrzeugs, das nicht vom Verkehrssystem ferngesteuert werden kann, kontrollierter und vorhersehbarer werden, sodass dieses Fahrzeug vom Verkehrssystem nicht als Fremdkörper oder Gefahrenstelle angesehen werden muss. Da die Fahrt des Fahrzeugs vorhersehbarer ist, können die Fahrwege der anderen Fahrzeuge besser geplant werden und gegebenenfalls andere Sicherheitsabstände berücksichtigt werden.

Vorzugsweise erhält das Fahrzeug einen Fahrweg, für den im Vergleich zu den Fahrwegen der ferngesteuerten Fahrzeuge zusätzliche Sicherheitsabstände und/oder Sicherheitsparameter berücksichtigt werden, um auf ein Fehlverhalten des Fahrers reagieren zu können.

Insgesamt wird durch die Übermittlung eines Fahrweges für das Fahrzeug, das nicht ferngesteuert werden kann, dessen Fahrt berechenbarer, wodurch die Sicherheit im Verkehrssystem erhöht werden kann.

Grundsätzlich kann der Fahrweg auf jede Art dargestellt werden, die für den Fahrer so wahrnehmbar ist, dass er entlang dieses Fahrweges fahren kann. Insbesondere kann dem Fahrer der gesamte Fahrweg mitgeteilt werden oder es werden nur einzelne Fahranweisungen übermittelt.

Beispielsweise wird der Fahrweg so übermittelt, dass dem Fahrer der Fahrweg oder Fahranweisungen für diesen Fahrweg innerhalb des Fahrzeugs angezeigt werden.

Die Übermittlung des Fahrwegs kann beispielsweise an ein Kommunikationsgerät des Fahrers erfolgen und dem Fahrer wird der Fahrweg durch das Kommunikationsgerät mitgeteilt. Die Verwendung eines mobilen Kommunikationsgerät bietet den Vorteil, dass dem Fahrer unabhängig vom Fahrzeug, insbesondere unabhängig von den Kommunikationsmöglichkeiten des Fahrzeugs, ein Fahrweg mitgeteilt werden kann. Beispielsweise kann das Kommunikationsgerät fahrzeugunabhängig sein, sodass der Fahrer das Kommunikationsgerät in verschiedenen Fahrzeugen nutzen kann.

Das Kommunikationsgerät kann ausschließlich für die Anzeige des Fahrwegs vorgesehen sein oder ein allgemeines Kommunikationsgerät sein, dass für verschiedene Kommunikationsmöglichkeiten ausgebildet ist. Beispielsweise kann auf dem Kommunikationsgerät ein Programm zur Anzeige des Fahrwegs oder Fahranweisungen vorgesehen sein, wobei dieses Programm ein speziell für die Kommunikation mit dem Verkehrssystem ausgebildetes Programm sein kann oder ein allgemeines Programm, beispielsweise eine Navigationsprogramm.

Vorzugsweise ist das Kommunikationsgerät ein mobiles Kommunikationsgerät.

Alternativ kann das Kommunikationsgerät ein Fahrzeugkommunikationsgerät sein, also ein im Fahrzeug installiertes Kommunikationsgerät. Dies kann den Vorteil haben, dass der Fahrweg über das im Fahrzeug installierte Kommunikationsgerät dargestellt werden kann. Beispielsweise weist das Fahrzeug ein Navigationssystem auf und der Fahrweg wird an das Navigationssystem gesendet und über dieses dem Fahrer mitgeteilt bzw. dargestellt. Der Fahrer kann dadurch auf die für ihn bekannte und gewohnte Technologie innerhalb des Fahrzeugs zugreifen, wodurch die Kommunikation mit dem Fahrer einfacher und sicherer sein kann.

Die Übermittlung des Fahrwegs an den Fahrer kann auf jede Weise erfolgen, durch die sichergestellt ist, dass der Fahrer den Fahrweg bzw. entsprechende Fahranweisungen wahrnehmen kann. Beispielsweise kann die Übermittlung des Fahrwegs an den Fahrer optisch und/oder akustisch erfolgen.

Das Übermitteln des Fahrwegs an das Kommunikationsgerät kann beispielsweise das Senden des Fahrwegs oder einzelner Fahranweisungen an das Kommunikationsgerät umfassen, wobei der Fahrweg bzw. die Fahranweisungen durch das Kommunikationsgerät, beispielsweise ein geeignetes Programm auf dem Kommunikationsgerät, so dargestellt werden, dass der Fahrer dem Fahrweg verfolgen kann. Alternativ kann auch eine Web-basierte Darstellung erfolgen, beispielsweise auf einer Homepage, die über das Kommunikationsgerät aufgerufen wird.

Der Fahrweg kann auf verschiedene Weise vom Kommunikationssystem an das Kommunikationsgerät gesendet werden. Beispielsweise erfolgt eine direkte Übermittlung des Fahrwegs vom Kommunikationssystem an das Kommunikationsgerät, insbesondere über ein lokales Netzwerk innerhalb des Verkehrssystems. Das lokale Netzwerk kann lediglich in einem Übergabe- oder Einfahrtsbereich vorgesehen sein, in dem das Fahrzeug auf die Verkehrsfläche des Verkehrssystems gelangt. Vorzugsweise ist das lokale Netzwerk aber auf der gesamten Verkehrsfläche empfangbar, insbesondere, um Fahrzeuge auf der Verkehrsfläche fernzusteuern, sodass über das lokale Netzwerk auch Änderungen des Fahrwegs und/oder Gefahrenhinweise an das Kommunikationsgerät und somit an den Fahrer übermittelt werden können.

Insbesondere bietet ein lokales Netzwerk den Vorteil, dass durch entsprechende Kommunikationseinrichtungen, beispielsweise Sende- und/oder Empfangseinrichtungen innerhalb des Verkehrssystems die Qualität der Kommunikationsverbindung zwischen dem Verkehrssystem und dem Fahrzeug beeinflusst werden kann.

Alternativ kann die Übermittlung des Fahrwegs auch über ein globales Kommunikationsnetzwerk an das Kommunikationsgerät erfolgen. Beispielsweise kann ein globales Telekommunikationsnetzwerk für die Übermittlung des Fahrweges verwendet werden.

Optional können auch sowohl ein lokales Kommunikationsnetzwerk wie auch ein globales Kommunikationsnetzwerk verwendet werden, wobei die Auswahl des Kommunikationsnetzwerks in Abhängigkeit von der Qualität der Kommunikationsverbindung zwischen dem Fahrzeug und dem Verkehrssystem gewählt werden kann.

In den vorstehend beschriebenen Ausführungsform erfolgt die Darstellung des Fahrwegs bzw. die Übermittlung des Fahrwegs bzw. der Fahranweisungen an den Fahrer jeweils innerhalb des Fahrzeugs.

Optional kann der Fahrweg auch durch zumindest eine im Verkehrssystem vorgesehene Kommunikationseinrichtung dargestellt werden, also außerhalb des Fahrzeugs dargestellt werden. Dadurch kann der Fahrweg unabhängig von den im Fahrzeug vorhandenen Kommunikationsmöglichkeiten dargestellt werden. Insbesondere ist es nicht erforderlich, dass im Fahrzeug ein Kommunikationsgerät vorhanden ist und/oder genutzt wird.

Des Weiteren kann die Darstellung des Fahrweges oder der Fahranweisungen durch das Verkehrssystem den Vorteil haben, dass andere Verkehrsteilnehmer innerhalb des Verkehrssystems diese Anweisungen ebenfalls wahrnehmen können und somit das Fahrverhalten des Fahrzeugs für andere Verkehrsteilnehmer berechenbarer wird.

Die Darstellung des Fahrwegs oder der Fahranweisungen kann optisch oder akustisch erfolgen. Beispielsweise kann der Fahrweg oder eine Fahreranweisung durch entsprechende Lichtsignale innerhalb des Verkehrssystems gekennzeichnet oder dargestellt sein, sodass der Fahrer diesen einfach folgen kann. Optional können auch andere Signale vorgesehen sein, die dem Fahrer die Fahrtrichtung anzeigen oder diesen vor Gefahrenstellen warnen.

Zur Durchführung des vorstehend beschriebenen Verfahrens ist es erforderlich, dass sich der Fahrer mit dem Fahrzeug vor dem Befahren des Verkehrssystems anmeldet, um zu prüfen, ob das Fahrzeug vom Verkehrssystem ferngesteuert werden kann. Das Anmelden am Verkehrssystem kann auf verschiedene Weise erfolgen.

Beispielsweise kann die Anmeldung des Fahrzeugs bzw. des Fahrers am Verkehrssystem über ein Kommunikationsgerät des Fahrers erfolgen. Beispielsweise kann die Anmeldung über eine Homepage erfolgen oder über ein Programm, dass auf dem Kommunikationsgerät installiert wird. Beispielsweise kann über das Programm oder die Anwendung, über die die Anmeldung erfolgt, auch später die Mitteilung der Fahranweisungen bzw. des Fahrwegs erfolgen.

Das Anmelden kann beispielsweise über ein lokales Kommunikationsnetzwerk und das Kommunikationssystem des Verkehrssystems erfolgen. Dadurch kann eine eindeutige Zuordnung des Fahrzeugs bzw. des sich im Fahrzeug befindenden Kommunikationsgerät erfolgen.

Optional kann das Anmelden auch über ein globales Kommunikationsnetzwerk erfolgen. Insbesondere kann dadurch bereits vor dem Befahren des Verkehrssystems eine Überprüfung erfolgen, ob das Fahrzeug vom Verkehrssystem ferngesteuert werden kann.

Insbesondere umfasst das Anmelden eine eindeutige Identifizierung des Fahrzeugs. Dies ist erforderlich, um das Fahrzeug und dessen Fahrweg während des Befahrens des Verkehrssystems eindeutig zuordnen zu können.

Die Identifizierung des Fahrzeugs kann auf verschiedene Weise erfolgen, beispielsweise indem das Kommunikationsgerät innerhalb des Fahrzeugs lokalisiert wird. Des Weiteren können bei der Anmeldung Fahrzeugparameter (Fahrzeugtyp, Kennzeichen, Fahrzeugfarbe etc.) angegeben werden, die eine eindeutige Identifizierung ermöglichen. Zusätzlich kann der Fahrer vor dem Befahren des Verkehrssystems dazu aufgefordert werden, das Fahrzeug eindeutig zu kennzeichnen, beispielsweise indem dem Fahrer Handlungen, beispielsweise das Geben von bestimmten Lichtsignalen, vorgegeben werden.

Die Anmeldung kann beispielsweise auch an für die Anmeldung vorgesehenen Anmeldepunkten oder Anmeldebereichen erfolgen, wodurch eine Zuordnung bzw. Identifizierung der Fahrzeuge vereinfacht werden kann, insbesondere wenn sich jeweils nur ein Fahrzeug in einem Anmeldebereich oder an einem Anmeldepunkt befindet.

Weitere Vorteile und Merkmale ergeben sich aus der nachfolgenden Beschreibung in Verbindung mit den beigefügten Zeichnungen. In diesen zeigen:
- Figur 1: eine schematische Darstellung eines Verkehrssystems;
- Figur 2: eine schematische Darstellung eines Fahrzeugs zum Befahren des Verkehrssystems aus Figur 1 ;
- Figur 3: eine schematische Darstellung eines zweiten Fahrzeugs zum Befahren des Verkehrssystems aus Figur 1; und
- Figur 4: ein Ablaufdiagramm eines Verfahrens zum Steuern eines Fahrzeugs in dem Verkehrssystem aus Figur 1.

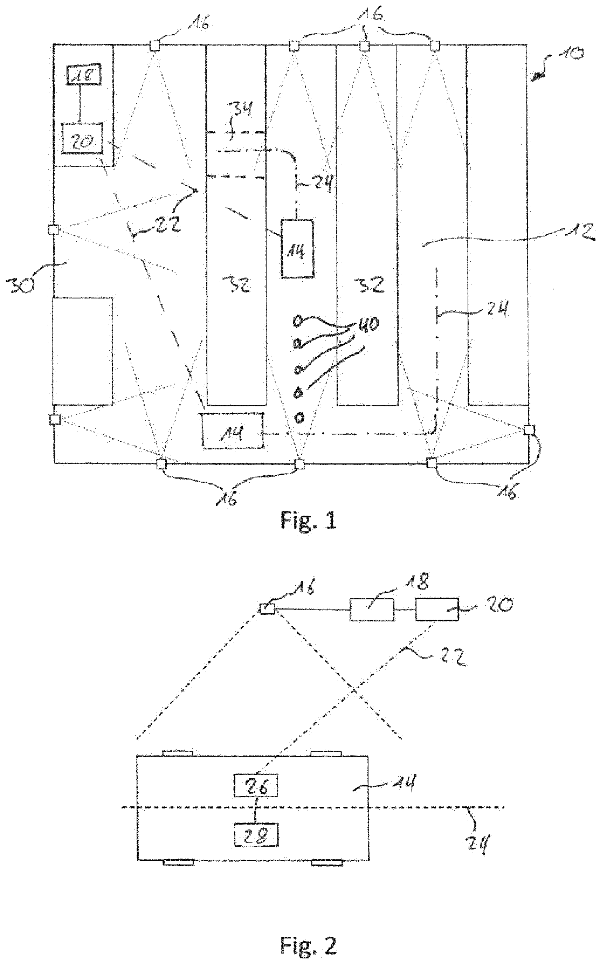

In Figur 1 ist ein Verkehrssystem 10 gezeigt. Das Verkehrssystem 10 hat einen Verkehrsfläche 12, auf der sich Fahrzeuge 14 bewegen können, sowie mehrere Umfeldsensoren 16, die den gesamten Verkehrsraum 12 sowie die sich in dem Verkehrsraum 12 bewegenden Fahrzeuge 14 und Verkehrsteilnehmer erfassen können. Des Weiteren weist das Verkehrssystem 10 eine Steuereinheit 18 sowie ein Kommunikationssystem 20 zum Aufbau einer Kommunikationsverbindung 22 zu den Fahrzeugen 14 auf.

Die Steuereinheit 18 kann auf Grundlage der von den Umfeldsensoren 16 erfassten Informationen über den Verkehrsraum 12 sowie die sich darin bewegenden Fahrzeuge 14 für jedes der Fahrzeuge 14 einen Fahrweg 24 innerhalb des Verkehrsraums 12 berechnen und entsprechende Fahranweisungen bzw. Steuerbefehle für die Fahrzeuge 14 ermitteln. Diese Fahranweisungen bzw. Steuerbefehle können über die Kommunikationsverbindung 22 an die Fahrzeuge 14 gesendet werden.

Die Fahrzeuge 14 haben jeweils eine Kommunikationseinheit 26 zum Aufbau der Kommunikationsverbindung 22 mit der Kommunikationseinrichtung 20. Über die Kommunikationseinheit 26 bzw. die Kommunikationsverbindung 22 können die Fahrzeuge 14 die Steuerbefehle empfangen und an eine Fahrzeugsteuerung 28 weiterleiten. Die Fahrzeugsteuerung 28 kann die Steuerbefehle umsetzen, so dass die Fahrzeuge 14 von Verkehrssystem 10 durch den Verkehrsraum 12 bewegt werden (Figur 2).

In der hier beschriebenen Ausführungsform ist das Verkehrssystem 10 ein Parksystem, das einen Anmeldebereich 30 sowie einen Parkbereich 32 aufweist, in dem die Fahrzeuge 14 abgestellt werden können (Figur 1).

Ein Fahrzeugnutzer kann sein Fahrzeug 14 im Anmeldebereich 30 an das Verkehrssystem 10 übergeben bzw. sich am Verkehrssystem 10 anmelden. Anschließend stellt das Parksystem eine Kommunikationsverbindung 22 mit dem Fahrzeug 14 her und steuert dieses über das Senden der Steuerbefehle ferngesteuert an einen Parkplatz 34 im Parkbereich 32.

Will der Fahrzeugnutzer sein Fahrzeug 14 nutzen, wird erneut eine Kommunikationsverbindung 22 mit dem Fahrzeug 14 aufgebaut und das Fahrzeug 14 über entsprechende Steuerbefehle an den Anmeldebereich 30 gefahren, an dem der Fahrzeugnutzer sein Fahrzeug 14 entgegennehmen kann.

Das Verkehrssystem 10 überwacht die Fahrzeuge 14 innerhalb des Verkehrsraumes 12 mit den Umfeldsensoren 16 und kann basierend auf den Informationen der Umfeldsensoren 16 die Steuerbefehle bzw. Fahranweisungen für die Fahrzeuge 14 korrigieren.

Die Steuerung der Fahrzeuge 14 innerhalb des Verkehrsraums 12 wird hierbei vollständig vom Verkehrssystem 10 übernommen. Die Steuerung des Fahrzeugs 14 umfasst das Senden von Fahranweisungen und/oder Steuerbefehlen, die vom Fahrzeug, insbesondere halbautomatisiert oder automatisiert umgesetzt werden sowie die Überwachung des Fahrzeugs 14 und dessen Bewegungen innerhalb des Verkehrsraumes 12. Das heißt, das Verkehrssystem 10 erfasst auch das Umfeld der Fahrzeuge 14 und sendet entsprechende Steuerbefehle zum Ausweichen oder Anhalten eines Fahrzeugs 14, wenn Gefahrenstellen oder Hindernisse für das Fahrzeug oder andere Verkehrsteilnehmer innerhalb des Verkehrsraumes 12 vorliegen.

Das vorstehend beschriebene Verfahren setzt voraus, dass die Fahrzeuge 14 zur Fernsteuerung durch das Verkehrssystem 10 ausgebildet sind, d. h. die Fahrzeuge benötigen eine Kommunikationseinrichtung 20 sowie eine Fahrzeugsteuerung 28, die die Steuerbefehle des Verkehrssystems 10 umsetzen kann.

Befindet sich ein Fahrzeug 36 auf der Verkehrsfläche, das nicht durch das Verkehrssystem 10 ferngesteuert werden kann, wird dieses als Hindernis bzw. Gefahrenstelle detektiert. Die Fahrwege der anderen Fahrzeuge 14 werden dementsprechend geplant bzw. korrigiert, sodass die Fahrzeuge 14 einen definierten Sicherheitsabstand zu diesem Fahrzeug 36 einhalten können.

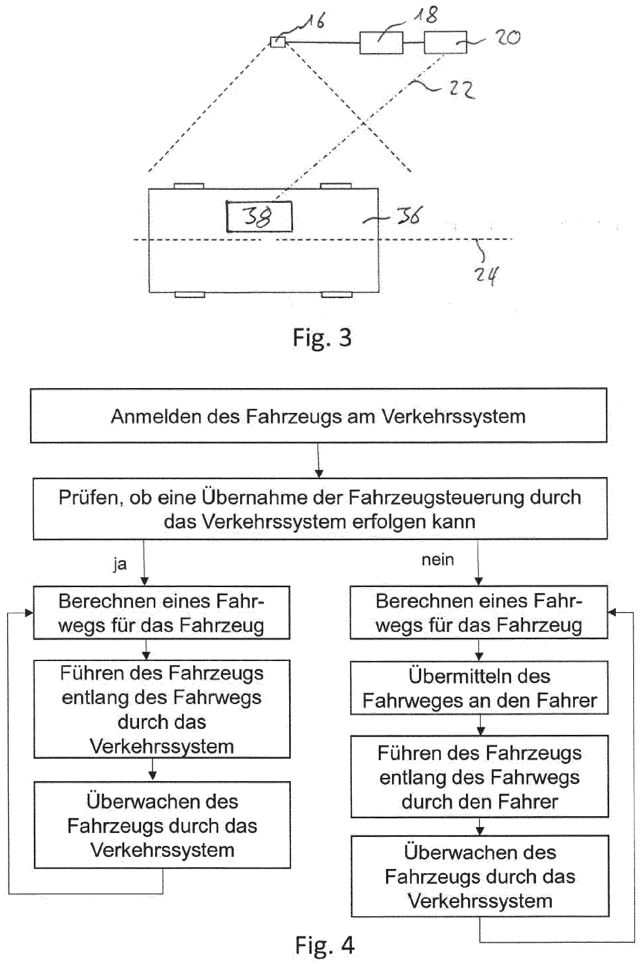

Um den Verkehrsfluss bzw. die Abläufe innerhalb des Verkehrssystems 10 zu verbessern, können sich auch solche Fahrzeuge 36 am Verkehrssystem 10 anmelden (Figur 4). Insbesondere kann die Anmeldung im Anmeldebereich 30 erfolgen, sodass zwingend eine Anmeldung am Verkehrssystem 10 erforderlich ist, bevor das Fahrzeug 36 auf die Verkehrsfläche 12 gelangt.

Die Anmeldung kann hierbei auf verschiedene Weise erfolgen. Beispielsweise können im Anmeldebereich 30 Anmeldevorrichtungen vorgesehen sein, an welchen sich der Fahrer mit seinem Fahrzeug registriert. Alternativ kann die Registrierung über ein Kommunikationsgerät 38 (siehe Figur 3), beispielsweise ein mobiles Kommunikationsgerät, insbesondere ein Telekommunikationsgerät, erfolgen. Der Fahrer kann sich mit dem Kommunikationsgerät 38 beispielsweise in einem lokalen Kommunikationsnetzwerk des Verkehrssystems 10 einwählen und das Fahrzeug anmelden. Optional kann die Anmeldung über ein globales Kommunikationsnetzwerk, beispielsweise ein Telekommunikationsnetzwerk erfolgen.

Beispielsweise kann auf dem Kommunikationsgerät 38 ein Programm zur Anmeldung am Verkehrssystem 10 vorgesehen sein, wobei in diesem Programm bereits Fahrzeuginformationen und/oder Informationen zum Fahrer gespeichert sein können. Alternativ kann die Anmeldung über eine webbasierte Plattform, beispielsweise eine Homepage, erfolgen.

Bei oder unmittelbar nach der Anmeldung erfolgt des Weiteren eine eindeutige Identifizierung des Fahrzeugs 36, um den Fahrweg 24 bzw. Fahranweisungen eindeutig diesem Fahrzeug 36 zuordnen zu können. Beispielsweise erfolgt diese Identifizierung im Anmeldebereich 30. Insbesondere kann durch entsprechende Einrichtung des Verkehrssystems 10 sichergestellt sein, dass sich während der Anmeldung jeweils nur ein Fahrzeug 36 im Anmeldebereich 30 befindet, sodass klargestellt ist, welches Fahrzeug 36 beim Verkehrssystem 10 angemeldet wird.

Optional kann die Identifizierung des Fahrzeugs 36 über die Lokalisierung des Kommunikationsgeräts 38 erfolgen oder der Fahrer wird aufgefordert, das Fahrzeug durch eine definierte Handlung zu identifizieren, beispielsweise durch Betätigung einer Beleuchtungseinrichtung oder durch Befahren eines bestimmten Abschnitts der Verkehrsfläche 12.

Verlässt das Fahrzeug 36 die Verkehrsfläche 12 bzw. das Verkehrssystem 10, erfolgte vorzugsweise eine Abmeldung durch den Fahrer.

Bei oder nach der Anmeldung des Fahrzeugs durch den Fahrer am Verkehrssystem 10 erfolgt durch das Verkehrssystem 10 eine Prüfung, ob über das Kommunikationssystem 20 eine Übernahme der Fahrzeugsteuerung und somit eine Fernsteuerung des Fahrzeugs 36 erfolgen kann.

Ist eine Übernahme der Fahrzeugsteuerung durch das Verkehrssystem 10 möglich, kann der Fahrer sein Fahrzeug verlassen und es erfolgt über die Kommunikationsverbindung eine Fernsteuerung des Fahrzeugs 14 innerhalb des Verkehrssystems 10 bzw. auf der Verkehrsfläche 12.

Ergibt die Prüfung durch das Verkehrssystem 10, dass das Verkehrssystem 10 die Fahrzeugsteuerung des Fahrzeugs 36 nicht übernehmen kann, muss der Fahrer das Fahrzeug 36 innerhalb des Verkehrssystems 10 führen. Das Verkehrssystem 10 berechnet hierzu einen Fahrweg 24 für das Fahrzeug 36 und übermittelt diesen an den Fahrer, sodass der Fahrer den Fahrweg 24 selbstständig abfahren kann.

Durch die Übermittlung des Fahrwegs 24 an den Fahrer werden die Bewegungen des Fahrzeugs zum 30 berechenbar, sodass die Fahrwege 24 der anderen Fahrzeuge 14 besser planbar sind.

Die Übermittlung des Fahrwegs 24 an den Fahrer kann auf verschiedene Weise erfolgen.

Beispielsweise wird der Fahrweg 24 an das Kommunikationsgerät 38 des Fahrers übermittelt und von diesem optisch oder akustisch dem Fahrer mitgeteilt. Beispielsweise werden durch das Kommunikationsgerät 38 Fahranweisungen ausgegeben, die auf dem übermittelten Fahrweg basieren. Insbesondere können kann der Fahrweg 24 optisch, beispielsweise auf einer Karte, dargestellt werden.

Das Kommunikationsgerät 38 kann hierbei auch ein im Fahrzeug 36 installiertes Kommunikationsgerät sein, beispielsweise ein Navigationsgerät, dem vom Verkehrssystem 10 der Fahrweg 24 übermittelt wird, so dass das Navigationsgerät diesen auf einem Bildschirm darstellen kann.

Zusätzlich sind im Verkehrssystem 10 Kommunikationseinrichtungen 40 vorgesehen, über die dem Fahrer der Fahrweg optisch, akustisch oder auf andere Weise dargestellt werden kann (siehe Figur 1). Beispielsweise weisen die Kommunikationseinrichtungen 40 Beleuchtungselemente auf, die dem Fahrer den Fahrweg und/oder Fahranweisungen mitteilen. Beispielsweise kann der Fahrweg durch auf der Verkehrsfläche eingelassene Beleuchtungselemente optisch dargestellt werden, sodass der Fahrer dem Fahrweg einfach erfolgen kann.

Unabhängig von den vorstehend beschriebenen Ausführungsbeispielen kann der Fahrweg dem Fahrer auf beliebige Weise mitgeteilt werden, über die sichergestellt ist, dass der Fahrer den Fahrweg und/oder Fahranweisungen zuverlässig wahrnehmen kann. Insbesondere können der Fahrweg und/oder Fahranweisungen unabhängig von Kommunikationsgeräten oder fahrzeuggebundenen Einrichtungen mitgeteilt werden.

## Patentansprüche

1. Verfahren zum Steuern eines Fahrzeugs (36) in einem Verkehrssystem (10), insbesondere einem Parksystem, wobei das Verkehrssystem (10) zumindest einen Umfeldsensor (16) zur Überwachung einer Verkehrsfläche (12) des Verkehrssystems (10), insbesondere einer Parkfläche eines Parksystems, ein Kommunikationssystem (20) zur Kommunikation mit dem Fahrzeug sowie ein Steuersystem (18) zum Berechnen eines Fahrwegs (24) für das Fahrzeug (36) aufweist, wobei das Verkehrssystem (10) über das Kommunikationssystem (20) die Steuerung eines Fahrzeugs (14) übernehmen und das Fahrzeug (14) entlang des berechneten Fahrwegs führen kann, mit folgenden Schritten:
- Anmelden des Fahrzeugs (14, 36) am Verkehrssystem (10),
- Prüfen durch das Verkehrssystem (10), ob über das Kommunikationssystem (20) eine Übernahme der Fahrzeugsteuerung durch das Verkehrssystem (10) erfolgen kann,
- wenn keine Übernahme der Fahrzeugsteuerung durch das Verkehrssystem (10) erfolgen kann, übermitteln eines berechneten Fahrweges (24) an den Fahrer und Führen des Fahrzeugs (36) durch den Fahrer entlang des übermittelten Fahrweges (24).

2. Verfahren nach Anspruch 1, **dadurch gekennzeichnet, dass** die Übermittlung des Fahrwegs (24) an ein Kommunikationsgerät (38) des Fahrers erfolgt und dem Fahrer der Fahrweg (24) durch das Kommunikationsgerät (38) mitgeteilt wird.

3. Verfahren nach Anspruch 2, **dadurch gekennzeichnet, dass** das Kommunikationsgerät (38) ein mobiles Kommunikationsgerät ist.

4. Verfahren nach Anspruch 2, **dadurch gekennzeichnet, dass** das Kommunikationsgerät (38) ein Fahrzeugkommunikationsgerät ist.

5. Verfahren nach einem der Ansprüche 2 bis 4, **dadurch gekennzeichnet, dass** das Kommunikationsgerät (38) den Fahrweg (24) dem Fahrer optisch und/oder akustisch mitteilt.

6. Verfahren nach einem der Ansprüche 2 bis 5, **dadurch gekennzeichnet, dass** die Übermittlung des Fahrweges (24) über das Kommunikationssystem, insbesondere über ein lokales Netzwerk, an das Kommunikationsgerät (38) erfolgt.

7. Verfahren nach einem der Ansprüche 2 bis 5, **dadurch gekennzeichnet, dass** die Übermittlung des Fahrweges (24) über ein globales Kommunikationsnetzwerk an das Kommunikationsgerät (38) erfolgt.

8. Verfahren nach einem der vorhergehenden Ansprüche, **dadurch gekennzeichnet, dass** der Fahrweg (24) durch zumindest eine im Verkehrssystem (10) vorgesehene Kommunikationseinrichtung (40) dargestellt wird.

9. Verfahren nach Anspruch 8, **dadurch gekennzeichnet, dass** die Darstellung über die Kommunikationseinrichtung (40) optisch und/oder akustisch erfolgt.

10. Verfahren nach einem der vorhergehenden Ansprüche, **dadurch gekennzeichnet, dass** das Anmelden des Fahrzeugs (14, 36) am Verkehrssystem (10) über ein Kommunikationsgerät (38) des Fahrers erfolgt.

11. Verfahren nach einem der vorhergehenden Ansprüche, **dadurch gekennzeichnet, dass** das Anmelden des Fahrzeugs (14, 36) über ein lokales Kommunikationsnetz und das Kommunikationssystem (20) des Verkehrssystems (10) erfolgt.

12. Verfahren nach einem der vorhergehenden Ansprüche, **dadurch gekennzeichnet, dass** das Anmelden des Fahrzeugs (14, 36) über ein globales Kommunikationsnetz erfolgt.

13. Verfahren nach einem der vorhergehenden Ansprüche, **dadurch gekennzeichnet, dass** das Anmelden des Fahrzeugs (14, 36) eine eindeutige Identifizierung des Fahrzeugs (14, 36) umfasst.

14. Verfahren nach einem der vorhergehenden Ansprüche, **dadurch gekennzeichnet, dass** das Verkehrssystem (10) Anmeldepunkte (30) für das Anmelden des Fahrzeugs (14, 36) aufweist.
